# EUROPEAN PATENT APPLICATION

(11) **EP 3 124 110 A1**
(43) Date of publication of application: **01.02.2017**
(21) Application number: 15179076.3
(22) Date of filing: 30.07.2015
(51) Int. Cl.: B01J 2/04, B01D 1/18

(54) **A PROCESS AND SPRAY DRYING APPARATUS FOR SPRAY DRYING PRODUCTS**

(71) Applicant: Sanovo Technologies A/S, 5210 Odense, NV (DK)
(72) Inventor: BORCHERT, Kjeld, 5230 Odense (DK)
(74) Representative: COPA Copenhagen Patents

(57) **Abstract**

A process for spray drying a liquid product in a horizontal spray drying apparatus with a horizontal drying chamber (1) comprises the steps: by means of a liquid spray nozzle (6) atomizing said liquid product to form a atomizing zone extending horizontally into an essentially horizontal stream of drying gas supplied by a drying gas supply inlet (10) to produce particles and fines, removing fines from the drying chamber and reintroducing fines into, i.e. recycling fines to the drying chamber by being preferably pneumatically supplied to or injected into the atomization zone by a fines nozzle (29).

## Description

### FIELD OF THE INVENTION

The present invention relates to a process and spray drying apparatus for spray drying products.

### BACKGROUND OF THE INVENTION

Spray drying of liquids is carried out in either a vertical dryer, also called a tower dryer, or a horizontal dryer, also called a box dryer.

In a vertical dryer, the liquid is sprayed essentially vertically downwardly into a drying chamber and atomized into a drying gas. A process for spray drying a liquid in a vertical dryer and a vertical spray drying apparatus are disclosed in EP 0729 383 B1 and BETE Spray Dry Manual, page 6, available on www.bete.com.

In a horizontal dryer, the liquid is supplied essentially horizontally to a horizontal drying chamber and atomized to form an atomizing zone in a stream of drying gas to produce a product comprising particles and fine particles, also called fines, falling down onto the bottom or a conveyor, such as a scraper conveyor, at the bottom of the drying chamber and removed from the drying chamber. As seen horizontally, the particles that are heavier than the fines fall down onto the bottom closer to the atomizing zone than the lighter fines. A process for spray drying a liquid in an horizontal dryer and a horizontal spray dryer are disclosed in US 2 815 071, US 2 835 597, US 3 129 131 and BETE Spray Dry Manual, page 6, available on www.bete.com.

The heavier particles are generally in contact with the hot drying air in a shorter period of time than the lighter fines. As a result, they may not be completely dry and still humid when reaching the bottom of the drying chamber and thereby adhere to each other. This is especially a problem when spray drying hygroscopic products that are sticky when reaching the bottom and tend to stick to the conveyor and the scraper blades of a scraper conveyor.

### SUMMARY OF THE INVENTION

An object of the present invention is to provide a spray drying process and a spray drying apparatus eliminating or at least alleviating the above drawbacks.

The above object is according to a first aspect of the present invention obtained by a process for spray drying a liquid product, especially a hygroscopic product, to a powdery or particulate product in a horizontal spray drying apparatus having a horizontal drying chamber defined by a first end wall being longitudinally spaced from a second opposite end wall, laterally spaced side walls and a top wall and a bottom wall, said process comprising the steps of:
- atomizing said liquid product by means of an atomizer, preferably a spray nozzle arranged in a part of the drying chamber at the first end wall, to form a atomizing zone extending horizontally in a direction from the first end wall towards the second end wall, the liquid product being atomized into an essentially horizontal stream of preferably hot drying gas, especially air, to produce particles and fines, the stream of drying gas being supplied to the drying chamber in a part of the drying chamber at the first end wall and flowing in the direction towards the second end wall, and
- removing the fines from the drying chamber and reintroducing them into, i.e. recycling them to, the drying chamber by preferably pneumatically supplying them to or injecting them into the atomization zone.

By recycling fines to, i.e. reintroducing fines into, the drying chamber by supplying them to or injecting them into the atomizing zone, they will adhere or stick to the humid or sticky particles in the atomizing zone and form a kind of slip layer on the particles, whereby the particles will be substantially dry when reaching the bottom, and their tendency to adhere or stich to each other or the conveyor will be eliminated or at least alleviated. As a result, it is easier to remove the particulate product from the drying chamber, thus obtaining a product of higher quality.

In an at present preferred embodiment of the invention, the liquid product is atomized by a spray nozzle to form a divergent conical atomization zone, preferably generally having a pattern of revolution about an axis extending through the apex of the atomization zone, said axis being essentially horizontal.

The liquid product is preferably atomized in the drying chamber by means of several spray nozzles so as to form a fine mist of liquid product extending transversely over the majority of the cross-sectional area of the drying chamber or essentially the entire cross-sectional area. The nozzles can be evenly distributed over especially the central portion of the cross-section of the drying chamber.

The stream of drying gas can be supplied as a generally cylindrical stream in a direction essentially parallel with the axis or axes of the atomization zone(s) and covering this/these zones(s) as seen in a cross-sectional view.

According to an embodiment of the invention, the stream of drying gas is supplied as a generally annular stream or stream portions forming an annular stream in a direction essentially concentric with the axis of the atomization zone.

According to a further embodiment of the invention, the fines are supplied to the drying chamber essentially co-current with the stream of the liquid product forming the atomization zone.

Good results have been obtained in tests of the mentioned embodiment.

The fines can be supplied as an essentially annular stream of fines. The annular stream of fines can be essentially coaxial with the axis of the atomization zone.

The fines can also be supplied as one or more plate- or fan-shaped streams of fines being preferably essentially parallel with the axis of the atomization zone.

Further, the annular stream of fines can be injected into or supplied to the drying chamber between the stream of liquid product and the annular stream of drying gas.

According to an additional embodiment, the fines are supplied to the drying chamber essentially counter-current with the stream of liquid product forming the atomization zone.

According to a further embodiment of the invention, the fines are supplied to the drying chamber essentially concentrically with the axis of the atomization zone.

In an additional embodiment of the invention, the fines are supplied to the drying chamber in a direction transversely of the stream of liquid product forming the atomization zone.

The transverse direction can be from essentially co-current to essentially counter-current, and the fines can be supplied upwardly, downwardly and/or laterally to the atomizing zone.

It should furthermore be noted that fines can be supplied both co-current, counter-current and transversely to the atomizing zone.

The fines can be removed separately from the drying chamber and reintroduced into the atomization zone in the drying chamber.

Alternatively or additionally, the fines can be removed from the drying chamber together with the particles and thereafter separated from the particles and reintroduced into the atomization zone in the drying chamber.

The previously mentioned object is according to a second aspect of the invention obtained by a spray drying apparatus comprising a horizontal drying chamber defined by a first end wall being longitudinally spaced from a second opposite end wall, laterally spaced side walls and a top wall and a bottom wall, the apparatus further comprising:
- at least one liquid spray nozzle arranged in a part of the drying chamber at the first end wall, and having a spray outlet opening with an outlet opening axis and arranged and configured for atomizing a liquid product to form an atomizing zone extending horizontally in a direction from the first end wall towards the second end wall,
- at least one drying gas supplying inlet arranged in a part of the drying chamber at the first end wall, and having a gas inlet opening with a gas inlet axis and being arranged and configured for directing an essentially horizontal stream of preferably hot drying gas, especially air, in a direction towards the second end wall and towards and into the atomization zone for producing a product in the form of particles and fines from the liquid product,
- a drying gas outlet arranged in the top wall or the second end wall, said outlet being optionally connected to an exhaust fan, and
- a conveyor, such as a scraper conveyor for conveying the product on the bottom wall to a first product outlet adjacent the second end wall and thereby out of the drying chamber, said conveyor being arranged at the bottom of the drying chamber and extending essentially between the first and the opposite second end walls thereof,
said apparatus being characterised by a fines removing means for removing fines from the drying chamber, and a preferably pneumatic reintroducing means for reintroducing removed fines into the drying chamber by supplying fines to or injecting fines into the atomization zone in the drying chamber, such as a fines nozzle having a fines outlet opening with a fines outlet axis and being arranged and configured for supplying fines to or injecting fines into the atomization zone in the drying chamber.

In an embodiment of the apparatus, the fines removing means comprises the drying gas outlet debouching into a separator, such as a cyclone or a filter device, especially a bag filter, configured for separating fines from the drying gas, and a fines line extends from a fines outlet of the separator to the reintroducing means such as the fines nozzle.

In a further embodiment of the apparatus according to the invention, the drying gas outlet is preferably arranged in the top wall or the upper portion of the second end wall and is covered by a filter device, preferably a bag filter arranged in the chamber, and a partition wall extends downwardly from the top wall and between the side wall to define a filter section in the chamber, the partition wall extending vertically beyond the lower end of the filter device, the filter device allowing gas to pass out through the gas outlet while catching fines which subsequently drop down onto the conveyor or bottom wall.

In the above embodiment, the drying gas outlet is preferably arranged in the top wall or the upper portion of the second end wall.

The filter device, such as the bag filter, is intermittently agitated by an agitation device, such as shaken or subjected to back pressure to release fines from the filter drop down on the bottom wall.

In the above embodiment, the fines removing means can comprise the first product outlet and a separator connected thereto, such as one or more filters, cyclones or screens configured to separate fines from particles and drying air from fines and particles, and a fines line extends from the fines outlet of the separator to the reintroducing means, such as a fines nozzle.

Alternatively, in the above-mentioned embodiment, a second outlet can be arranged in the bottom wall essentially below the lower end of the partition wall and horizontally outside the filter section of the drying chamber, the fines removing means comprising the scraper conveyor scraping fines into the first bottom outlet, and a fines line extends from the first bottom outlet to the reintroducing means, such as a fines nozzle.

As mentioned previously, the particles are heavier than the fines and drop down on the bottom in a shorter distance from the first end wall than the fines. In the present case, the particles drop down on the bottom wall between the first end wall and the second product outlet comprising a transverse groove. The scraper blades of the scraper conveyor scrape longitudinally along the bottom wall and scrape the particles into the second product outlet comprising a second transverse groove and scrape the fines dropping down from the filter between the partition wall and the second end wall down into the first product outlet comprising a first transverse groove.

The spray drying apparatus preferably comprises several liquid spray nozzles with preferably parallel axes.

The drying gas supply inlet can be an inlet providing a generally cylindrical stream of drying gas in a direction essentially parallel with the axis or axes of the atomization zone(s) and covering this/these zone(s) as seen in a cross-sectional view.

According to an embodiment of the invention, the drying gas supplying inlet is an annular inlet with an annular gas outlet opening arranged coaxially with the liquid spray nozzle and surrounding the spray outlet opening as seen in horizontal direction.

According to a further embodiment of the apparatus, the fines nozzle is arranged in the drying chamber with the axis of the fines outlet opening thereof directed to supply fines co-current with the stream of the liquid product ejected through the liquid spray nozzle to form the atomizing zone.

The fines nozzle can be configured to provide a plate-shaped stream being essentially parallel with the axis of the liquid spray nozzle.

In an embodiment, the fines outlet nozzle is arranged concentrically with the liquid product outlet opening and the drying air inlet opening and between said openings, i.e. surrounding the liquid product outlet opening and being surrounded by the drying air opening when seen horizontally.

According to a further embodiment of the apparatus according to the invention, the fines nozzle is arranged in the drying chamber with the axis of the fines outlet opening thereof directed to supply fines counter-current with the stream of liquid product ejected through the liquid spray nozzle to form the atomizing zone.

Further, the fines nozzle can be arranged in the drying chamber with the axis of the fines outlet opening thereof directed to supply fines transversely of the stream of liquid product ejected through the liquid spray nozzle to form the atomizing zone.

Finally, it should be noted that the fines nozzles can be arranged in the drying chamber with the axis of the fines outlet opening directed to supply fines co-current, counter-current and transversely to the stream of liquid product ejected through the liquid spray nozzle to form the atomizing zone.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 is a diagrammatical view of a first embodiment of a spray drying apparatus according to the invention,
Fig. 2 is a diagrammatical view of a second embodiment of a spray drying apparatus according to the invention,
Fig. 3 is a diagrammatical view of a third embodiment of a spray drying apparatus according to the invention,
Fig. 4 is a diagrammatical view of a fourth embodiment of a spray drying apparatus according to the invention,
Fig. 5 is a diagrammatical view of part of the drying chamber of the spray drying apparatus at the first end wall thereof and discloses liquid product nozzles ejecting a atomized stream, and drying gas inlets supplying a drying gas stream and additionally, fines supply nozzles arranged and configured to supply a fines stream co-current with the atomized stream and the drying gas stream,
Fig. 6 is a diagrammatical view corresponding to that of Fig. 5, but where fines supply nozzles supply a fines stream counter-current to the atomized stream and the drying gas stream,
Fig. 7 is a diagrammatical view corresponding to that of Fig. 5, but where fines supply nozzles supply a fines stream transversely to the atomized stream and the drying gas stream,
Fig. 8 is a diagrammatical enlarged view of a variant of the inlets and nozzles shown in Fig. 5 supplying co-current streams of liquid product, drying gas and fines to the drying chamber, and
Fig. 9 is a diagrammatical front view of the inlets and nozzles shown in Fig. 8.

### DETAILED DESCRIPTION OF THE INVENTION

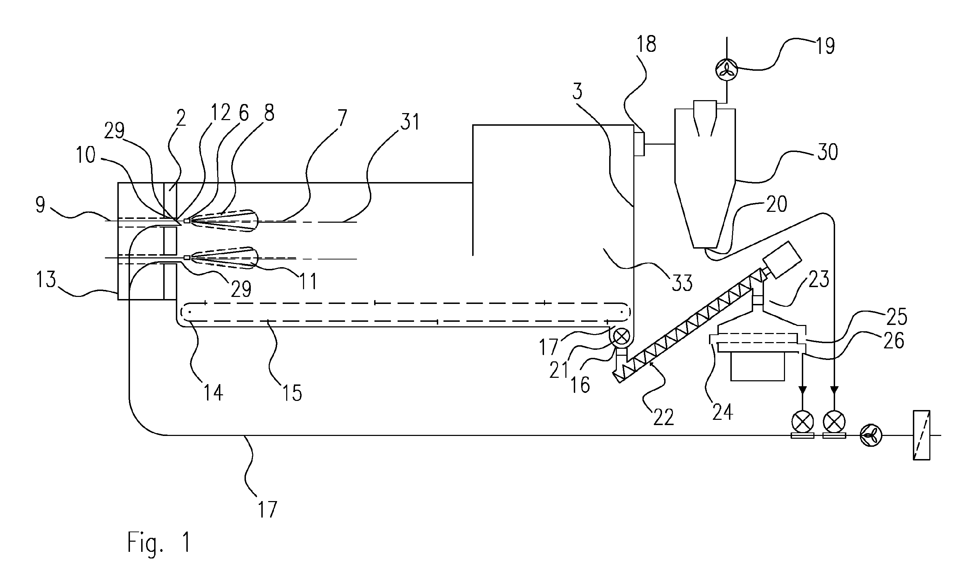

The first embodiment of a horizontal spray drying apparatus according to the invention shown in Fig. 1 comprises a horizontal drying chamber 1 defined by a first end wall 2 longitudinally spaced from an opposite second end wall 3, laterally spaced side walls not shown, a top wall 4 and a bottom wall 5. In the area at the first end wall 2, the apparatus comprises two liquid spray nozzles 6, each having a spray outlet opening with a spray outlet opening axis 7. Each liquid spray nozzle is arranged and configured for atomizing a liquid product to form an atomizing zone 8 extending horizontally in the direction from the first end wall 2 towards the second end wall 3. The liquid product to be spray dried is supplied to the nozzle through a liquid supply line 9 and can be a hygroscopic product. Two drying air supply inlets 10 are arranged at the first end wall 2. Each drying gas supply inlet 10 is an annular inlet with an annular gas inlet opening 12. The gas supply inlet 10 is arranged coaxially with and surrounds a liquid spray nozzle 6 as seen horizontally and is arranged and configured for directing an essentially horizontal stream 11 of hot drying gas towards the second end wall 3 and towards and into the atomizing zone 8 for producing a product of particles and fine particles, i.e. fines from the liquid product. The hot drying gas is hot air supplied from a plenum 13. Due to their larger size, the particles formed are heavier than the fines formed and humid whereas the fines formed are very light and dry. As a result thereof, the particles fall down onto the bottom wall closer to the first end wall than the fines and are floating over a shorter period of time than the fines that can float over a long period of time without falling down on the bottom wall.

A partition wall 32 extends downwardly from the top wall 4 and between the side walls to define an outlet section 33 of the drying chamber 1 in which essentially only fines float as particles have dropped onto the bottom wall before reaching said section of the drying chamber. The lower end of the partition wall 32 is spaced from a scraper conveyor 14 at the bottom wall 5.

The scraper conveyor 14 is provided with scraper blades 15 and extends essentially from the first end wall 2 to the second end wall 3. A first product outlet 16 comprising a first transverse groove 17 in the bottom wall 5 is provided adjacent the second end wall 3. During operation of the scraper conveyor, the scraper blades thereof are in contact with the bottom wall and scrape the product on the bottom wall into the first transverse groove of the first product outlet 16.

Additionally, the drying chamber 1 is provided with a drying gas outlet 18 at the upper end of the second end wall 3. The drying gas outlet 18 is through a cyclone 30 connected to an exhaust fan 19. The exhaust fan draws drying gas and fines entrained therein out of the drying chamber, and in the cyclone, the fines are separated from the gas and leave the cyclone 30 through a lower fines outlet 20. The fines are separately removed from the drying chamber by means of the cyclone 30.

The product, i.e. particles and fines scraped into the first transverse groove of the first product outlet 16, is by means of a first transverse screw conveyor 21 removed from the drying chamber and transferred to a upwardly slanting screw conveyor 22. From the upwardly slanting screw conveyor, 22 the particles and fines are transferred to a separator 23 in the form of a screening device separating the product in particles being the desired end product, fines and oversize particles. The end product particles leave the separator through an end product particles outlet 24, the oversize particles leave the separator 23 through an oversize particles outlet 25 and the fines leave the separator through a fines outlet 26. The fines outlet 26 is connected to a fines recycling line 27 being provided with two fines nozzles 29 arranged at the first wall 2 for reintroducing fines removed from the drying chamber into the drying chamber 1. Additionally, the lower fines outlet 20 of the cyclone 31 is through a fines outlet line 28 connected to the fines recycling line 27.

More specifically, each fines nozzle 29 is provided with a fines outlet opening with a fines outlet axis 31 and is arranged and configured for supplying fines to and/or injecting fines into the atomizing zone 8 in the drying chamber 1. In the embodiment shown in Fig. 1, the fines outlet axis 31 of the fines nozzle 29 is essentially parallel to the spray outlet axis 7 of the liquid spray nozzle 6. By supplying the dry fines to the humid particles in the atomizing zone the fines adhere to the surface of the particles and form a kind of slip layer preventing or at least alleviating the tendency of the particles to stick to each other, to the bottom wall and/or to the scraper blades of the scraper conveyor. Thereby, the process for spray drying the liquid product is improved and additionally, the quality of the particulate end product is improved.

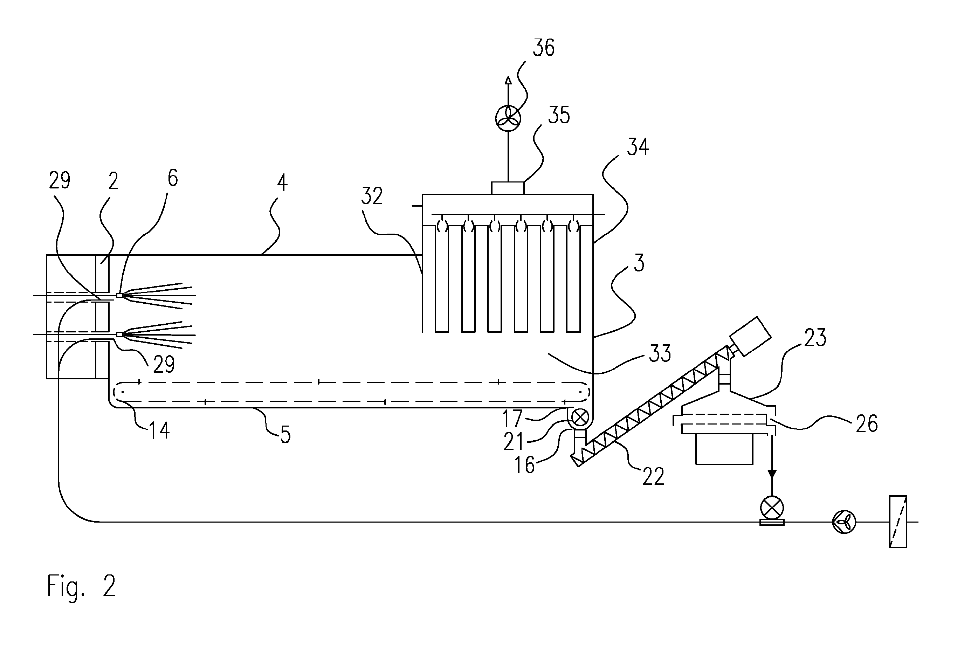

The second embodiment of a spray drying apparatus shown in Fig. 2 is in many aspects similar to that shown in Fig. 1, the most important difference being that a bag filter 34 is arranged in the drying chamber in the outlet section 33 defined between the partition wall 32 and the second end wall 3. The outlet section may thereby be considered a filter section of the drying chamber. The lower end of the partition wall 32 extends slightly beyond the lower end of the bag filter 34. Instead of the drying gas outlet at the upper end of the second end wall and the cyclone of the first embodiment shown in Fig. 1, the second embodiment shown in Fig. 2 is provided with the mentioned bag filter 34 and a drying gas outlet 35 being provided in the top wall and connected to the exhaust fan 36 drawing drying gas out of the chamber through the bag filter. Additionally, the apparatus is provided with a agitation device (not shown) for shaking and or providing a back flow through the bag filter. By the action of the agitation device, fines caught on the bag filter come off the filter and drop down on the bottom wall 5.

As explained with reference to Fig 1., the product comprising the particles and the fines is by means of the scraper conveyor 14 scraped into the first transverse groove 17 of the first product outlet 16 and removed from the drying chamber through said outlet. From the first product outlet 16, the product is by means of the upwardly slanting screw conveyor 22 transferred to the separator 23 in the form of a screening device where the fines are separated from particles. Through the fines outlet 26 of the separator 23, the fines recycling line 27 and the fines nozzles, fines are reintroduced into the drying chamber as described with reference to Fig. 1.

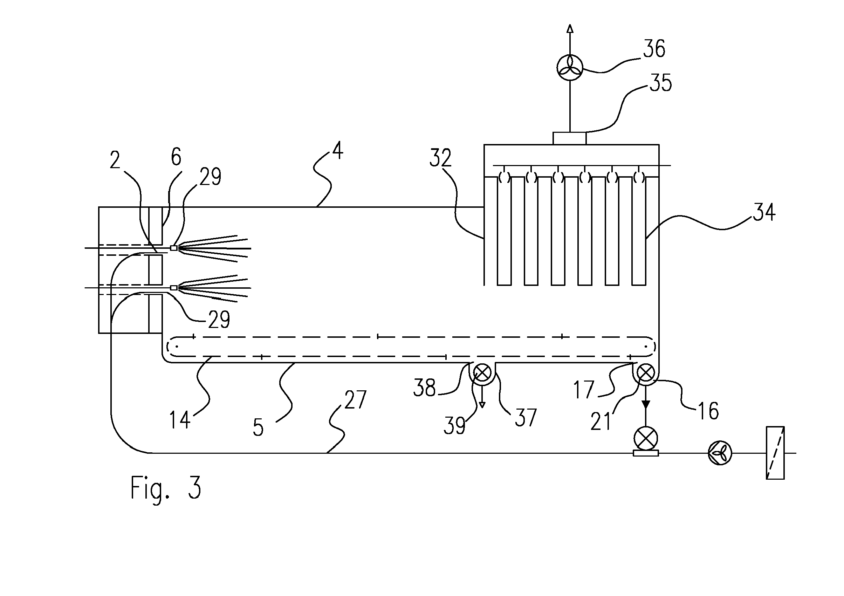

Fig. 3 discloses an embodiment of the invention that in many aspects is similar to that described above with reference to Fig. 2, the main differences being that the upwardly slanting screw conveyor and the separator in the form of a screening device have been omitted, that a second outlet 37 comprising a second transverse groove 38 with a second transverse screw conveyor 39 have been provided in the bottom wall 5 and that only fines are removed from the drying chamber through the first product outlet 16 being now a fines outlet.

The second transverse groove 38 of the second product outlet 37 is arranged in the bottom wall essentially below the partition wall 32 and horizontally outside the outlet or filter section 33 of the drying chamber 1. As previously mentioned, the particles that are heavy fall down onto the bottom wall in a first area between the first end wall 2 and the partition wall 32 and the fines that are light are floating through the chamber into the outlet or filter section of the chamber and caught by the bag filter. From the bag filter 34, the fines fall down onto the bottom wall 5 in a second area between the partition wall and the second end wall. As a result, and when the scraper conveyor 14 is activated, particles in the first area of the bottom wall are scraped into the second transverse groove 38 of the second product outlet 37 and by means of the second transverse screw conveyor 39 removed from the drying chamber 1. Simultaneously with scraping the particles into the second transverse groove, the scraper conveyor 14 also scrapes fines on the second area of the bottom wall into the first transverse groove 17 of the first product outlet 16 now being an outlet for fines alone. From the outlet 16, the fines enter the recycling line 27 and are reintroduced into the drying chamber through the fines nozzles 29 at the first end wall 2. As described previously, the fines nozzles supply fines to or inject fines into the atomizing zone 8.

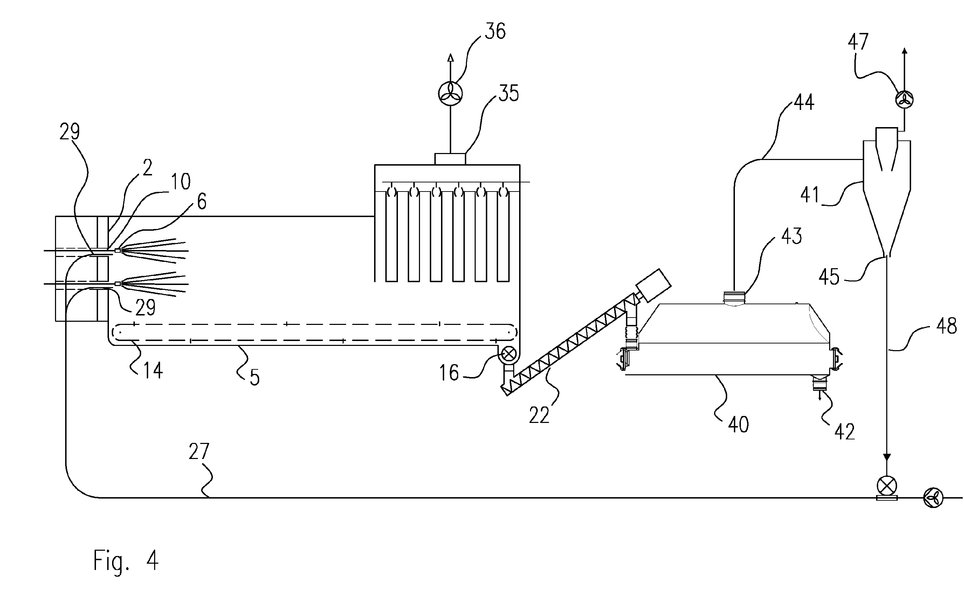

The fourth embodiment of the invention shown in Fig. 4 is in many aspects similar to that shown in Fig. 2, the main differences being that the separator in the form of a screening device has been omitted and replaced by a fluid bed apparatus 40 and a cyclone 41 as will be described in more details below.

As in the second embodiment described with reference to fig 2 product comprising particles and fines is removed from the drying chamber 1 through the first product outlet 16 and transferred to the upwardly slanting screw conveyor 22. The upwardly slanting screw conveyor 22 is connected to the above mentioned fluid bed apparatus 40. In the fluid bed apparatus 40, the product is separated in particles leaving the fluid bed apparatus 40 through a lower particles outlet 42 and fines leaving the fluid bed apparatus 40 through an upper fines and gas outlet 43. From the mentioned upper outlet 43, fines and gas are transferred to the mentioned cyclone 41 through a transfer line 44. In the cyclone 41, fines are separated from gas and leave the cyclone through a lower fines outlet 45, whereas the gas leaves the cyclone through an upper gas outlet 46. From the lower fines outlet 45, the fines are transferred through a fines outlet line 48 to a fines recycling line 27 and reintroduced into the drying chamber through the fines nozzles 29 at the first end wall 2.

In the first to fourth embodiment shown diagrammatically in Figs. 1 to 4, fines are supplied to or injected into the atomizing zone through the fines nozzle 29 co-current with the liquid product supplied to the drying chamber through the liquid spray nozzle 6 and the drying gas supplied to the drying chamber through the drying gas supply inlet 10.

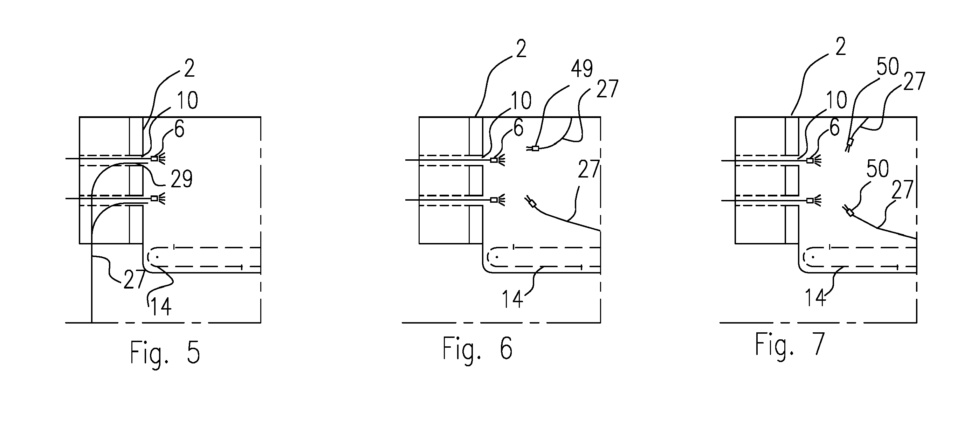

Fig. 5 discloses a fraction of the spray drying apparatus at the first end wall 2 thereof, the above nozzles and inlets 29, 6, 10 being arranged as shown in Figs. 1 to 4, i.e. to supply co-current streams.

Comparing Fig. 5 with Fig. 6 it can be seen that in Fig. 6, the fines recycling line 27 is provided with a fines supply nozzle 49 arranged and configured for supplying fines to the atomization zone counter current to the stream supplied by the liquid spray nozzle 6 and also counter current to the stream supplied by the gas supply inlet 10.

Comparing Fig. 7 with Figs. 5 and 6, it can be seen that in Fig. 7, the fines recycling line 27 is provided with a fines supply nozzle 50 arranged and configured for supplying fines to the atomization zone 8 transversely to the stream supplied by the liquid spray nozzle 6 and also counter-current to the stream supplied by the gas supply inlet 10. The transverse supply of fines can be from essentially co-current to essentially counter current.

It should be noted that although only two nozzles and inlets have been shown, the apparatus can comprise any number of the different nozzles and inlets. Additionally, the different nozzles and inlets can be arranged and configured to supply the respective streams co-current, counter- current or transversely as desired.

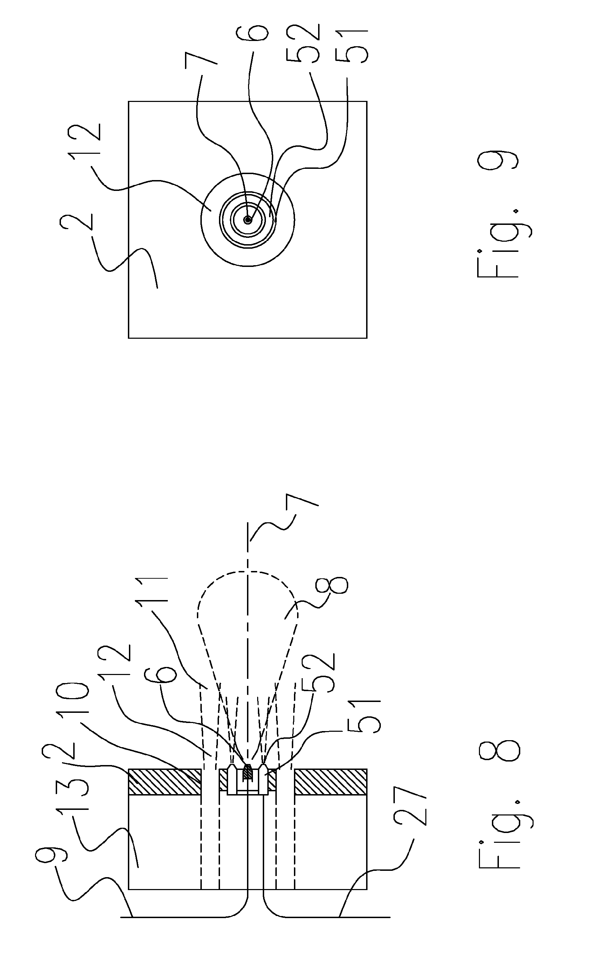

Finally, reference is made to Fig. 8 disclosing diagrammatically an enlarged view of a variant of the nozzles shown in Figs. 1 to 5 supplying co-current streams of liquid product, drying gas and fines to the drying chamber. As described previously with reference to Fig 1.

In the area at the first end wall 2, the apparatus comprises a liquid spray nozzle 6 having a spray outlet opening with a spray outlet opening axis 7. The liquid spray nozzle is arranged and configured for atomizing a liquid product to form an atomizing zone 8 extending horizontally in the direction from the first end wall 2 towards the second end wall 3. The liquid product to be spray dried is supplied to the nozzle through a liquid supply line 9. A drying air supply inlet 10 is arranged at the first end wall 2. The drying gas supply inlet 10 is an annular nozzle with an annular gas inlet opening 12. The gas supply inlet 10 is arranged coaxially with and surrounds the liquid spray nozzle 6 as seen horizontally and is arranged and configured for directing an essentially horizontal stream 11 of hot drying gas towards the second end wall 3 and towards and into the atomizing zone 8 for producing a product of particles and fine particles, i.e. fines from the liquid product. In the variant shown in Fig. 8, an annular fines supply nozzle 51 is arranged coaxially with the liquid spray nozzle 6 and the annular gas supply inlet 10 with the annular gas inlet opening 12. The annular fines supply nozzle 51 is provided with an annular fines outlet opening 52 and is arranged between the liquid spray nozzle 6 and the annular gas supply inlet 10 as seen horizontally, i.e. surrounds the liquid spray nozzle and is surrounded by the gas supply inlet as seen horizontally. Fines are supplied to the annular fines supply nozzle 51 through the fines recycling line 27.

Finally, it should be noted that the outlet opening of the gas supply inlet 10 could be a circular inlet opening supplying a cylindrical stream of drying gas and that the liquid spray nozzle 6 can be arranged downstream of the gas supply inlet.

### LIST OF REFERENCE NUMERALS

- 1.: horizontal drying chamber
- 2.: first end wall
- 3.: second end wall
- 4.: top wall
- 5.: bottom wall
- 6.: liquid spray nozzle
- 7.: spray outlet axis
- 8.: atomizing zone
- 9.: liquid supply line
- 10.: gas supply inlet
- 11.: stream of hot drying air
- 12.: annular gas inlet opening
- 13.: plenum
- 14.: scraper conveyor
- 15.: scraper blades
- 16.: first product outlet
- 17.: first transverse groove
- 18.: drying gas outlet
- 19.: exhaust fan
- 20.: lower fines outlet
- 21.: first transverse screw conveyor
- 22.: upwardly slanting screw conveyor
- 23.: separator in the form of a screening device
- 24.: end product particles outlet
- 25.: oversize particles outlet
- 26.: fines outlet
- 27.: fines recycling line
- 28.: fines outlet line
- 29.: fines nozzle
- 30.: cyclone
- 31.: fines outlet axis
- 32.: partition wall
- 33.: outlet section /filter section
- 34.: bag filter
- 35.: drying gas outlet
- 36.: exhaust fan
- 37.: second product outlet
- 38.: second transverse groove
- 39.: second transverse screw conveyor
- 40.: fluid bed apparatus
- 41.: cyclone
- 42.: lover particle outlet
- 43.: upper fines and gas outlet
- 44.: transfer line
- 45.: lower fines outlet
- 46.: upper gas outlet
- 47.: exhaust fan
- 48.: fines outlet line
- 49.: fines supply nozzle
- 50.: fines supply nozzle
- 51.: annular fines supply nozzle
- 52.: fines outlet opening of annular fines supply nozzle

## Claims

1. A process for spray drying a liquid product, especially a hygroscopic product, to a powdery or particulate product in a horizontal spray drying apparatus having a horizontal drying chamber defined by a first end wall being longitudinally spaced from a second opposite end wall, laterally spaced side walls and a top wall and a bottom wall, comprising the steps of:
- atomizing said liquid product by means of an atomizer, preferably a spray nozzle arranged in part of the drying chamber at the first end wall, to form a atomizing zone extending horizontally in a direction from the first end wall towards the second end wall, the liquid product being atomized into an essentially horizontal stream of preferably hot drying gas, especially air, to produce particles and fines, the stream of drying gas being supplied to the drying chamber in a part of the drying chamber at the first end wall and flowing in the direction towards the second end wall, and
- removing fines from the drying chamber and reintroducing them into, i.e. recycling them to, the drying chamber by preferably pneumatically supplying them to or injecting them into the atomization zone.

2. A process according to claim 1, wherein the liquid product is atomized by a spray nozzle to form a divergent conical atomization zone preferably generally having a pattern of revolution about an axis extending through the apex of the atomization zone, said axis being essentially horizontal.

3. A process according to any of the preceding claims, wherein the stream of drying gas is supplied as a generally annular stream or stream portions forming an annular stream in a direction essentially concentric with the axis of the atomization zone.

4. A process according to any of the preceding claims, wherein the fines are supplied to the drying chamber essentially co-current with the stream of liquid product forming the atomization zone.

5. A process according to any of the preceding claims 1 and 2, wherein the fines are supplied to the drying chamber essentially counter-current with the stream of liquid product forming the atomization zone.

6. A process according to any of the preceding claims, wherein the fines are supplied to the drying chamber essentially concentrically with the axis of the atomization zone.

7. A spray drying apparatus comprising a horizontal drying chamber (1) defined by a first end wall (2) being longitudinally spaced from a second opposite end wall (3), laterally spaced side walls and a top wall (4) and a bottom wall (5), the apparatus further comprising:
- at least one liquid spray nozzle (6) arranged in a part of the drying chamber at the first end wall, and having a spray outlet opening with an outlet opening axis (7) and arranged and configured for atomizing a liquid product to form a atomizing zone (8) extending horizontally in a direction from the first end wall towards the second end wall,
- at least one drying gas supplying inlet (10) arranged in a part of the drying chamber at the first end wall, and having a gas inlet opening with a gas inlet axis and being arranged and configured for directing an essentially horizontal stream (11) of preferably hot drying gas, especially air, in a direction towards the second end wall and towards and into the atomization zone (8) for producing a product in the form of particles and fines from the liquid product,
- a drying gas outlet (18) arranged in the top wall or the second end wall, said outlet being optionally connected to an exhaust fan (19,36), and
- a conveyor (14), such as a scraper conveyor for conveying the product on the bottom wall (5) to a first product outlet (16) adjacent the second end wall and thereby out of the drying chamber, said conveyor being arranged at the bottom of the drying chamber (1) and extending essentially between the first and the opposite second end walls thereof,
said apparatus being **characterized in** a fines removing means for removing fines from the drying chamber, and a preferably pneumatic reintroducing means for reintroducing removed fines into the drying chamber by supplying fines to or injecting fines into the atomization zone (8) in the drying chamber (1), by such as a fines nozzle (29) having a fines outlet opening with a fines outlet axis and being arranged and configured for supplying fines to or injecting fines into the atomization zone in the drying chamber (1).

8. An apparatus according to claim 7, wherein the fines removing means comprises the drying gas outlet (18) debouching into a separator, such as an cyclone (30), a screening device or a filter device, especially a bag filter, configured for separating fines from the drying gas and optionally also fines from particles, and a fines line (28) extending from a fines outlet (26) of the separator to the reintroducing means, such as the fines nozzle (29).

9. An apparatus according to claim 7, wherein the drying gas outlet (35) is preferably arranged in the top wall or the upper portion of the second end wall and is covered by a filter device, preferably a bag filter (34) arranged in the chamber (1), and a partition wall (32) extends downwardly from the top wall (4) and between the side wall to define a filter section (33) in the chamber, the partition wall (32) extending vertically beyond the lower end of the filter device, the filter device allowing gas to pass out through the gas outlet while catching fines which subsequently drop down onto the conveyor or bottom wall.

10. An apparatus according to claim 9, wherein the fines removing means comprises the first product outlet (16) and a separator (23) connected thereto, such as one or more filters, cyclones or screens configured to separate fines from particles and drying air from fines and particles, and a fines line (27;48,27) extends from the fines outlet (26,45) of the separator to the reintroducing means such as a fines nozzle (29).

11. An apparatus according to claim 9, wherein a second product outlet is arranged in the bottom wall (5) essentially below the lower end of the partition wall (32) and horizontally outside the filter section (33) of the drying chamber, the fines removing means comprising the scraper conveyor (14) scraping fines into the first outlet (16) at the bottom wall (27), and a fines line extends from the first product outlet (16) at the bottom wall to the reintroducing means, such as a fines nozzle (29).

12. An apparatus according to any of the preceding claims 7 to 11, wherein the drying gas supplying inlet (10) is an annular inlet with an annular gas inlet opening (12) arranged coaxially with the liquid spray nozzle (16) and surrounding the spray outlet opening as seen in horizontal direction.

13. An apparatus according to any of the preceding claims 7 to 12, wherein the fines nozzle (29) is arranged in the drying chamber with the axis of the fines outlet opening thereof directed to supply fines co-current with the stream of liquid product ejected through the liquid spray nozzle (6) to form the atomizing zone.

14. An apparatus according to claim 13, wherein the fines outlet nozzle (29) is arranged concentrically with the liquid product outlet opening (7) and the gas inlet opening (12) and between said openings, i.e. surrounding the liquid product outlet opening (7) and being surrounded by the drying gas inlet when seen horizontally.

15. An apparatus according to any of the preceding claims 7 to 12, wherein the fines nozzle (49) is arranged in the drying chamber with the axis of the fines outlet opening thereof directed to supply fines counter-current with the stream of liquid product ejected through the liquid spray nozzle (6) to form the atomizing zone.
